# EUROPEAN PATENT APPLICATION

(11) **EP 3 530 122 A1**
(43) Date of publication of application: **28.08.2019**
(21) Application number: 18305188.7
(22) Date of filing: 23.02.2018
(51) Int. Cl.: A23J 1/00, A23J 1/14, A23K 20/00

(54) **A DRY OILSEED MEAL PROTEIN FRACTION**

(71) Applicant: Avril, 75008 Paris (FR)
(72) Inventor: The designation of the inventor has not yet been filed
(74) Representative: LLR

(57) **Abstract**

A protein-rich fraction from oilseed meal of sunflower or *Brassica* L. seed which is obtainable by a process of electrostatic separation. The dry sunflower protein-rich composition may comprise a dry matter content of sunflower proteins ranging from 44 to 60, in weight %, and a dry matter content of Acid Detergent Lignin ranging from 2 to 5 in weight % in respect of the total weight of dry matter of said composition. The dry *Brassica* L. protein-rich composition may comprise a dry matter content of *Brassica* L. proteins ranging from 40 to 50, in weight %, and a content of Acid Detergent Lignin ranging from 1.5 to 4 in weight % in respect of the total weight of dry matter of said composition.

## Description

### Field of the invention

The invention relates to the field of protein fractionation of an oilseed meal and in particular a *Brassica* L. and/or a sunflower seed meal.

### Prior art

Oilseed meals have interesting feeding properties for animals, however the animal feed currently available have a protein level which is ranging from 30% to 40% w/w. A recognised target for animal feed purpose is to reach at least 50 wt% of proteins. Another desirable target is a fraction with a low content of fibers.
Two main processes can be implemented to process oilseed meals in order to increase the percentage of proteins: wet extraction and dry extraction (fractionation). A wet extraction process uses a solvent, such as water, to extract the proteins from a (usually defatted) oilseed meal via solubilisation, separation and concentration. Such processes are wasteful in energy and in solvent (water), but are the ones most commonly used for obtaining extracts with high levels of proteins.
Dry fractionation is carried out by separation of finely ground dry powders, or flours, originating from, at least partially, defatted oilseed meals coming from dehulled or non dehulled seed. One method is the use of triboseparation such as described in patent publication WO2012/031080. The physical characteristics that are used in the dry process are the differences of electrostatic charge of grounded flour particles according to their composition. Grinded oilseed meals are constituted of mixed particles made of a combination of materials and comprise particles richer in protein and particles richer in bran and fibers. The smaller the particles are, the purer each particle is. Depending upon its composition, each particle which is submitted to a friction becomes charged and particles having similar characteristics of charge and mass can be separated by the application of an electromagnetic field. This principle has now been successfully applied to a belt separator system. According to such a system a mixture of particles is loaded onto a belt between electrodes where it is subjected to an electric field generated by the electrodes. The net result is that the positively charged particles subjected to the electric field move towards the negative electrode and the negatively charged particles move towards the positive electrode. The counter-current action of the moving belt segments sweep the electrodes in opposite directions and transport the constituents of the particle mixture to their respective discharge points on either end of the separator. Ultimately, each particle is transferred toward one end of the system by the counter-current moving belt that produces a certain degree of separation of the particle mixture. However due to the complexity of their constituents and their size, organic particles do not act as mineral particles and are difficult to dissociate and concentrate according to this method. For example vertical type parallel electrostatic separators are rapidly covered by a layer of charged powder, and the efficacy of the filter capacity of the electrostatic separator is therefore reduced.

It has now been found that the process according to the invention, which uses tribo-separation, allows to obtain a composition which originates from oilseed and which is either high in proteins and low in fibres and/or low in proteins and high in fibres when compared to the respective relative amount of proteins and fibres contained in the starting material, such as an oilseed meal.
A particular embodiment of the invention is therefore a protein-rich fraction from oilseed meal which is obtained, or can be obtained, by a process of electrostatic separation, said process comprising the following steps:
a) providing a grinded particles powder of an oilseed meal, said oilseed meal having a D₅₀ ranging from 400 µm to 10 µm and a moisture content ranging from 2% to 15% in weight by total weight of said powder, to a device for electrostatic separation, said device comprising:
   - a feed port,
   - at least two parallel, spaced, electrodes each positioned horizontally facing one another, one of said electrode being a top electrode and the other being a bottom electrode, and an electrode gap being defined as the space between said two electrodes,
   - a belt traveling in a generally horizontal direction, said belt being positioned, at least partially, within said gap between said spaced electrodes, said belt forming a continuous longitudinal loop having two extremities, and having two opposite traveling belt portions which are moving in opposite directions for transporting particles of said powder to an extremity of said belt,
   - a first collecting container in fluid communication with one of the extremity of said belt to collect the particles dropping from said belt at that one extremity;
b) applying an electrical field between said electrodes by applying to said electrodes a difference of potential of 2 to 8 kV;
c) driving said belt at a speed ranging from 15 to 25 m/s, preferably 15 to 20 m/s;
d) feeding said grinded particle powder to said travelling belt via said feed port within said continuous longitudinal loop; and
e) recovering said protein fraction from said first collecting container;
wherein said oilseed meal is a sunflower seed meal or *Brassica* L. *seed* meal.

*Brassica* L. preferably includes *Brassica napus* L., *Brassica napus* var. *napus* (rapeseed or canola), *Brassica carinata, Brassica oleracea, Brassica rapa, Brassica nigra,* more preferably *Brassica napus* L., *Brassica napus* var. *napus, Brassica carinata,* most preferably *Brassica napus* var. *napus.*
The term sunflower refers to *Helianthus annuus.*
The expression "protein-rich" refers, of course, to the fact that the protein content of the composition, or fraction, according to the invention is higher than the protein content of the original oilseed meal.
The expression "dry matter" is used in the usual way to describe the part of the composition, fraction or substance that would remain if all its water content was removed.
An oilseed meal is the result of an extraction of oil from the seed. Any known extraction processes is encompassed by this term, such as the use of mechanical pressure, which can be combined with either an organic (chemical) extractant (e.g. hexane) and/or an increased temperature. According to a variant of the invention an organic extractant can be used, although it is encompassed that no organic (chemical) extractant is utilised in the process, especially when the protein-rich composition is for human consumption. It is preferred that the oilseed meal, or "cake", to be fractionated is defatted, that is, contains very little oil (e.g. less than 5% w/w, preferably less than 2%, by total weight of the meal).
It is also preferred for the oil seed meal to be made from dehulled seed.
Advantageously the oilseed meal to be used as a starting material has a protein content (w/w) of at least 20%, in particular at least 30%, by total weight of the oilseed meal.
When using a sunflower-seed meal it is preferred to use a meal having a protein content (w/w) ranging from 28.0% to 40.0 %, in particular 34.0% to 39.0 %, for example 37.3%. When using a *Brassica L.* meal, it is preferred to use a meal having a protein content ranging from 25.0%. to 35.0 %, in particular 31.0% to 33.0%, for example 32.5%.
The protein-rich fraction according to the invention is advantageously obtained by electrostatic separation, also known as "tribo-separation". This process is applied to dry particles of the oilseed meal as a starting material. The term "dry" when applied to the fraction or the composition of the invention refers to a moisture content which is usually inferior to 15 % (w/w), more particularly inferior to 10%. Thus the oilseed meal is usually grinded. The oilseed meal can be grinded using a classifier mill, jet mill, fine impact mill, pin mill or an air classifier mill. The average size of the particle's powder or the size distribution of the particles may vary. Advantageously, the grinded particles have a D₅₀ being less than, or equal to, 50µm, preferably less than, or equal to, 25µm According to a preferred embodiment the size distribution of the particles used presents a D₅₀ which may range from 10 µm to 300 µm, preferably from 10 µm to 200 µm. It is preferred to use a D₅₀ ranging from 10 µm to 100 µm, preferably from 10 µm to 50 µm and most preferably from 20 µm to 30 µm. According to another preferred embodiment, the size distribution of the particles used presents a D₉₀ which may range 500 µm to 50 µm, preferably from 300 µm to 60 µm, more preferably from 150 µm to 50 µm. Using a combination of the following D₅₀ and D₉₀ values from 20 µm to 30 µm and from 60 µm to 300 µm, respectively, provides particularly good results for protein fractionation of *Brassica* L. meal. Using a combination of the following D₅₀ and D₉₀ values from 30 µm to 70 µm and from 70 µm to 150 µm respectively provides particularly good results for protein fractionation of a sunflower meal.

The device used to carry out the electrostatic separation comprises at least one feed port which is usually positioned above the belt/electrode arrangement, preferably vertically. The feed port is advantageously internally configured to increase the electrostatic charges of the oilseed meal particles falling through the port. For example, the feeding port can be of a sufficient length and include projections, mesh or corrugations on its internal surface, or volume, to provide such an electrostatic charging effect. If the fraction of interest is the protein-rich fraction, then the feeding port is preferably positioned close or closer to the collecting device for the protein-rich fraction and if the fraction of interest is the fibre-rich fraction then the feeding port is preferably positioned close or closer to the collective device for said fibre-rich fraction, in order to improve the mass yield of said fraction of interest in protein or fibre respectively.
The distance, or space, between the two electrodes, the "electrode gap", may vary from 0.5 cm to 2 cm. Preferably, this distance may range from 1.1 to 1.3 cm, and particularly may be 1.2 cm. The top electrode may present a positive polarity and said bottom electrode a negative polarity, or vice versa.
The difference of potential applied to the electrodes may be in a range from 2 to 8 kV, preferably from 5 to 7 kV, and preferably around 6 kV.

The belt is traveling in a generally horizontal direction and most of the belt's surface, in use, is moving according to a horizontal direction. The belt is being positioned, at least partially, in between the electrodes' gap. The dimension of the belt/electrodes arrangement can be variable depending upon, inter alia, the quantity of oilseed meal particles to be processed. The skilled person would know how to scale up or down such features. The belt material is made of an elastomeric material of the type generally used for this type of device. The belt can advantageously be of an opened grid construction or have a mesh configuration such as the ones shown in WO 9831469.

The speed of the belt conveying the particles may conveniently vary, although in order to carry out a particularly effective separation a high speed is preferred. Such a speed should be at least of 3m/s, preferably at least 15m/s and more preferably 20m/s. Using a speed ranging from 18m/s to 21m/s provides particularly good results.

At the extremity of the belt, the protein-rich particles which are positively charged and which have been conveyed by the belt's portion closest to the negatively charged electrode, reach the point where the belt leave the electrode vicinity and fall or drop from the belt. A first container (24) positioned at this point collects the falling particles which then forms a protein-rich fraction.

The fractioning, or separating, process can be carried out more than once. According to an embodiment of the invention steps a) to e) are carried out on a protein fraction recovered from step e), at least once. Such a process would provide a fraction which would know as a second "pass".

The expression "protein-rich fraction" within the meaning of the invention is a quantity of powder originating from oilseed, in particular from an oilseed meal, and obtained according to a fractionating separation process. In such a process, the starting material is separated into fractions, which have compositions that vary according to a gradient. Fractions are collected based on differences in a specific property of the individual components, in this case, electrostatic charges.

The average increase in protein content, in weight, that can be obtained is at least superior to 4%, generally superior to 5 %, preferably superior to 9% and even up to 15%, or more (e.g. 21%).

### Protein content

Preferably, the sunflower protein-rich fraction, or composition, according to the invention has a protein content (w/w dry matter) which ranges from 44% to 60%, preferably from 48% to 60%, more preferably from 50% to 60%, by total weight of said fraction. These values are measured according to French Standard NF EN Iso 16634 (2008).

Preferably, the *Brassica* L. protein-rich fraction, or composition, according to the invention has a protein content (w/w dry matter) as measured according to the standard which ranges from 40% to 50%, preferably from 42% to 50%, more preferably from 45% to 50%, by total weight of said fraction. These values are measured according to French Standard NF EN Iso 16634 (2008).

### Acid Detergent Lignin (ADL) content

Preferably, the sunflower protein-rich fraction, or composition, according to the invention has an ADL content (w/w dry matter) which ranges from 2% to 5%, preferably from 3% to 4%, by total weight of said fraction. These values are measured according to French Standard NF V18-122 (2013).

Preferably, the *Brassica* L. protein-rich fraction, or composition, according to the invention has an ADL content (w/w dry matter) which ranges from 1.5% to 4%, preferably from 2% to 3.5%, by total weight of said fraction. These values are measured according to French Standard NF V18-122 (2013).

### Cellulose content

Preferably, the sunflower protein-rich fraction, or composition, according to the invention has a cellulose content (w/w dry matter) which ranges from 4% to 15%, preferably from 4% to 10%, by total weight of said fraction. These values are measured according to French Standard NF V03-040 (1993).

Preferably, the *Brassica* L. protein-rich fraction, or composition, according to the invention has a cellulose content (w/w dry matter) which ranges from 6% to 11%, preferably from 6% to 9%, by total weight of said fraction. These values are measured according to French Standard NF V03-040 (1993).

### Mineral (inorganic) materials

Preferably, the sunflower protein-rich fraction, or composition, according to the invention has a mineral materials' content (w/w dry matter) which ranges from 6.5% to 9%, preferably from 6.5% to 8%, by total weight of said fraction. These values are measured according to French Standard NF V18-101 (1977).

Preferably, the *Brassica* L. protein-rich fraction, or composition, according to the invention has a mineral materials' content (w/w dry matter) which ranges from 5.5% to 8%, preferably 5.5% to 7%, by total weight of said fraction. These values are measured according to French Standard NF V18-101 (1977).

### Neutral Detergent Fibre (NDF)

Preferably, the sunflower protein-rich fraction, or composition, according to the invention has a neutral detergent fibre content (w/w dry matter) which ranges from 16% to 38%, preferably 16% to 25%, by total weight of said fraction. These values are measured according to French Standard NF V18-122 (2013).

Preferably, the *Brassica* L. protein-rich fraction, or composition, according to the invention has a neutral detergent fibre content (w/w dry matter) which ranges from 20% to 38%, preferably 22% to 30%, by total weight of said fraction. These values are measured according to French Standard NF V18-122 (2013).

### Acid Detergent Fibre (ADF)

Preferably, the sunflower protein-rich fraction, or composition, according to the invention has an acid detergent fibre content (w/w dry matter) which ranges from 8% to 20%, preferably from 8% to 14%, by total weight of said fraction. These values are measured according to French Standard NF V18-122 (2013).

Preferably, the *Brassica* L. protein-rich fraction, or composition, according to the invention has an acid detergent fibre content (w/w dry matter) which ranges from 10% to 20%, preferably from 12% to 15%, by total weight of said fraction. These values are measured according to French Standard NF V18-122 (2013).

### Particle size distribution

Preferably, the sunflower protein-rich fraction, or composition, according to the invention is a powder made of particles. Advantageously the size distribution of the particles presents a D₅₀ which may range from 10 µm to 300 µm, preferably from 10 µm to 200 µm. More preferably the D₅₀ ranges from 30 µm to 70 µm It is further preferred that the powder also presents a D₉₀ ranging from 50 µm to 500 µm, preferably 50 µm to 300 µm, more preferably 50 µm to 150 µm. Using a combination of the following D₅₀ and D₉₀ values 30 µm to 70 µm and 50 µm to 150 µm respectively provides particularly good results. These values are measured with Malvern equipment by laser diffraction using dry dispersion method (i.e. the particles are dispersed in air).

Preferably, the *Brassica* L. protein-rich fraction, or composition, according to the invention is a powder made of particles. Advantageously the size distribution of the particles present a D₅₀ which may range from 10 µm to 300 µm, preferably from 10 µm to 200 µm. More preferably the D₅₀ ranges from 30 µm to 70 µm. It is further preferred that the powder also presents a D₉₀ ranging from 50 µm to 500 µm, preferably 50 µm to 300 µm, more preferably 50 µm to 100 µm. Using a combination of the following D₅₀ and D₉₀ values 30 µm to 70 µm and 50 µm to 100 µm respectively provides particularly good results. These values are measured with Malvern equipment by laser diffraction using dry dispersion method (i.e. the particles are dispersed in air).

### Moisture content

Preferably, the sunflower protein-rich fraction, or composition, according to the invention has a moisture content (w/w) which ranges from 2.5% to 12%, by total weight of said fraction. These values are measured according to French Standard NF V18-109 (October 2011).

Preferably, the *Brassica* L. protein-rich fraction, or composition, according to the invention has a moisture content (w/w) which ranges from 2.5% to 12% by total weight of said fraction. These values are measured according to French Standard NF V18-109 (October 2011).

### Fat content

Preferably, the sunflower protein-rich fraction, or composition, according to the invention has a fat content (w/w dry matter) which ranges from 1% to 6% by total weight of said fraction. These values are measured according to European Standard CEE 98/64 (1998).

Preferably, the *Brassica* L. protein-rich fraction, or composition, according to the invention has a fat content (w/w dry matter) which ranges from 1% to 6% by total weight of said fraction. These values are measured according to European Standard CEE 98/64 (1998).

As a particularly preferred embodiment of the invention the sunflower protein-rich fraction, or composition, has both the protein content and the lignin content mentioned above.

As another particular preferred embodiment of the invention the sunflower protein-rich fraction, or composition, has both a protein content (w/w dry matter) ranging from 44% to 60% and a lignin content (w/w dry matter) ranging from 2% to 5%, by total weight of said fraction. Preferably, the protein content (w/w dry matter) ranges from 50% to 60% and the lignin content (w/w dry matter) ranges from 3% to 4%, by total weight of said fraction.

As another particular preferred embodiment of the invention, the sunflower protein-rich fraction, or composition, has a protein content (w/w dry matter) ranging from 44% to 60%, a lignin content (w/w dry matter) ranging from 2% to 5%, a cellulose content (w/w dry matter) ranging from 4% to 15%, a mineral materials content (w/w dry matter) ranging from 6.5% to 9%, a neutral detergent fibre content (w/w dry matter) ranging from 16% to 38%, an acid detergent fibre content (w/w dry matter) ranging from 8% to 20%, a D₅₀ particle size distribution ranging from 10µm to 300µm, a moisture content (w/w) ranging from 2.5% to 12% and a fat content (w/w dry matter) ranging from 1% to 6%, by total weight of said fraction.

As another particular preferred embodiment of the invention the sunflower protein-rich fraction, or composition, has a protein content (w/w dry matter) ranging from 50% to 60%, a lignin content (w/w dry matter) ranging from 3% to 4%, a cellulose content (w/w dry matter) ranging from 4% to 10%, a mineral materials content (w/w dry matter) ranging from 6.5% to 8%, a neutral detergent fibre content (w/w dry matter) ranging from 16% to 25%, an acid detergent fibre content (w/w dry matter) ranging from 8% to 14%, a D₅₀ particle size distribution ranging from 30µm to 70µm, a moisture content (w/w) ranging from 2.5% to 12% and a fat content (w/w dry matter) ranging from 1% to 6%, by total weight of said fraction.

As a particularly preferred embodiment of the invention, the *Brassica* L. protein-rich fraction, or composition, has both the protein content and the lignin content mentioned above.

As another particular preferred embodiment of the invention the *Brassica* L. protein-rich fraction, or composition, has both a protein content (w/w dry matter) ranging from 40% to 50% and a lignin content (w/w dry matter) ranging from 1.5% to 4%, by total weight of said fraction. Preferably, the protein content (w/w dry matter) ranges from 45% to 50% and the lignin content (w/w dry matter) ranges from 2% to 3.5%, by total weight of said fraction.

As another particular preferred embodiment of the invention the *Brassica* L. protein-rich fraction, or composition, has a protein content (w/w dry matter) ranging from 40% to 50%, a lignin content (w/w dry matter) ranging from 1.5% to 4%, a cellulose content (w/w dry matter) ranging from 6% to 11%, a mineral materials content (w/w dry matter) ranging from 5.5% to 8%, a neutral detergent fibre content (w/w dry matter) ranging from 20% to 38%, an acid detergent fibre content (w/w dry matter) ranging from 10% to 20%, a D₅₀ particle size distribution ranging from 10µm to 300µm, a moisture content (w/w) ranging from 2.5% to 12% and a fat content (w/w dry matter) ranging from 1.5% to 6%, by total weight of said fraction.

As another particular preferred embodiment of the invention the *Brassica* L. protein-rich fraction, or composition, has a protein content (w/w dry matter) ranging from 45% to 50%, a lignin content (w/w dry matter) ranging from 2% to 3.5%, a cellulose content (w/w dry matter) ranging from 6% to 9%, a mineral materials content (w/w dry matter) ranging from 5.5% to 7%, a neutral detergent fibre content (w/w dry matter) ranging from 20% to 30%, an acid detergent fibre content (w/w dry matter) ranging from 12% to 15%, an D₅₀ particle size distribution ranging from 30µm to 70µm, a moisture content (w/w) ranging from 2.5% to 12% and a fat content (w/w dry matter) ranging from 1.5% to 6%, by total weight of said fraction.

### Fibre-rich fraction

As it can be easily understood, during the tribo-separation, protein-low particles are separated from protein-rich particles. These protein-low (fibre-rich particles) can also be recovered. Indeed, as they are charged negatively, they will be moving and be conveyed to the opposite extremity of the belt by the electrode/belt separator. A second collecting container in fluid communication with said opposite extremity of the separating belt can be provided to collect the particles' powder dropping or falling at that opposite end. The collected particles will form a fibre-rich fraction. Such a fibre-rich fraction, from a sunflower seed of a *Brassica* L. seed meal, is also an object of the invention.

### Protein content

Preferably, the sunflower fibre-rich fraction, or composition, according to the invention has a protein content (w/w dry matter) which ranges from 20% to 35%, preferably 25% to 32% by total weight of said fraction. These values are measured according to French Standard NF EN Iso 16634 (2008).

Preferably, the *Brassica* L. fibre-rich fraction, or composition, according to the invention has a protein content (w/w dry matter) which ranges from 20% to 35%, preferably 25% to 32%, by total weight of said fraction. These values are measured according to French Standard NF EN Iso 16634 (2008).

### Acid Detergent Lignin content (ADL)

Preferably, the sunflower fibre-rich fraction, or composition, according to the invention has an ADL content (w/w dry matter) which ranges from 5% to 15%. These values are measured according to French Standard NF V18-122 (2013).

Preferably, the *Brassica* L. fibre-rich fraction, or composition, according to the invention has an ADL content (w/w dry matter) which ranges from 10% to 20% by total weight of said fraction. These values are measured according to French Standard NF V18-122 (2008).

### Cellulose content

Preferably, the sunflower fibre-rich fraction, or composition, according to the invention has a cellulose content (w/w dry matter) which ranges from 25% to 35% by total weight of said fraction. These values are measured according to French Standard NF V03-040 (1993).

Preferably, the *Brassica* L. fibre-rich fraction, or composition, according to the invention has a cellulose content (w/w dry matter) which ranges from 15% to 25% by total weight of said fraction. These values are measured according to French Standard NF V03-040 (1993).

### Mineral materials

Preferably, the sunflower fibre-rich fraction, or composition, according to the invention has a mineral materials' content (w/w dry matter) which ranges from 4% to 10% by total weight of said fraction. These values are measured according to French Standard NF V18-101 (2013).

Preferably, the *Brassica* L. fibre-rich fraction, or composition, according to the invention has a mineral materials' content (w/w dry matter) which ranges from 4% to 10% by total weight of said fraction. These values are measured according to French Standard NF V18-101 (2013).

### Neutral Detergent Fibre (NDF)

Preferably, the sunflower fibre-rich fraction, or composition, according to the invention has a neutral detergent fibre content (w/w dry matter) which ranges from 40% to 55%, preferably from 45% to 55%, by total weight of said fraction. These values are measured according to French Standard NF V18-122 (2013).

Preferably, the *Brassica* L. fibre-rich fraction, or composition, according to the invention has a neutral detergent fibre content (w/w dry matter) which ranges from 40% to 55%, preferably from 45% to 55%, by total weight of said fraction. These values are measured according to French Standard NF V18-122 (2013).

### Acid Detergent Fibre (ADF)

Preferably, the sunflower fibre-rich fraction, or composition, according to the invention has an acid detergent fibre content (w/w dry matter) which ranges from 20% to 35%, preferably from 25% to 35%, by total weight of said fraction. These values are measured according to French Standard NF V18-122 (2013).

Preferably, the *Brassica* L. fibre-rich fraction, or composition, according to the invention has an acid detergent fibre content (w/w dry matter) which ranges from 20% to 35%, preferably from 25% to 35%, by total weight of said fraction. These values are measured according to French Standard NF V18-122 (2013).

### Particle size distribution

Preferably, the sunflower fibre-rich fraction, or composition, according to the invention is a powder made of particles. Advantageously the size distribution of the particles presents a D₅₀ which may range from 10 µm to 400 µm, preferably from 10 µm to 200 µm. Preferably the D₅₀ ranges from 30 µm to 70 µm. It is further preferred that the powder also presents a D₉₀ ranging from 50 µm to 500 µm, preferably 50 µm to 300 µm, more preferably 50 µm to 150 µm. Using a combination of the following D₅₀ and D₉₀ values ranging from 30 µm to 70 µm and 50 µm to 150 µm, respectively, provides particularly good results. These values are measured with Malvern equipment by laser diffraction using dry dispersion method (*i.e.* the particles are dispersed in air).

Preferably, the *Brassica* L. fibre-rich fraction, or composition, according to the invention is a powder made of particles. Advantageously the size distribution of the particles present a D₅₀ which may range from 10 µm to 400 µm, preferably from 10 µm to 200 µm. Preferably, the D₅₀ ranges from 30 µm to 70 µm. It is further preferred that the powder also presents a D₉₀ ranging from 50 µm to 500 µm, preferably 50 µm to 300 µm, more preferably 50 µm to 100 µm. Using a combination of the following D₅₀ and D₉₀ values ranging from 30 µm to 70 µm and 50 µm to 100 µm, respectively, provides particularly good results. These values are measured with Malvern equipment by laser diffraction using dry dispersion method (i.e. the particles are dispersed in air).

### Moisture content

Preferably, the sunflower fibre-rich, or composition, according to the invention has a moisture content (w/w) which ranges from 2.5% to 12% These values are measured according to French Standard NF V18-109 (October 2011).

Preferably, the *Brassica* L. fibre-rich, or composition, according to the invention has moisture content (w/w) which ranges from 2.5% to 12%. These values are measured according to French Standard NF V18-109 (October 2011).

### Fat content

Preferably, the sunflower fibre-rich, or composition, according to the invention has a fat content (w/w dry matter) which ranges from 1% to 6%. These values are measured according to European Standard CEE 98/64 (2011).

Preferably, the *Brassica* L. fibre-rich, or composition, according to the invention has a fat content (w/w dry matter) which ranges from 1.5% to 6%. These values are measured according to European Standard CEE 98/64 (2011).

As a particularly preferred embodiment of the invention, the sunflower fibre-rich fraction, or composition, has the cellulose content, the neutral detergent fibre content and the acid detergent fibre content mentioned above.

As another particular preferred embodiment of the invention the sunflower fibre-rich fraction, or composition, has the cellulose content (w/w dry matter) ranging from 25% to 35%, the neutral detergent fibre content (w/w dry matter) ranging from 40% to 55% and the acid detergent fibre content (w/w dry matter) ranging from 20% to 35%, by total weight of said fraction, preferably the cellulose content (w/w dry matter) ranging from 25% to 35%, the neutral detergent fibre content (w/w dry matter) ranging from 45% to 55% and the acid detergent fibre content (w/w dry matter) ranging from 25% to 35%, by total weight of said fraction.

As another particular preferred embodiment of the invention the sunflower fibre-rich fraction, or composition, has protein content protein content (w/w dry matter) ranging from 20% to 35%, lignin content (w/w dry matter) ranging from 5% to 15%, cellulose content (w/w dry matter) ranging from 25% to 35%, mineral materials content (w/w dry matter) ranging from 4% to 10%, neutral detergent fibre content (w/w dry matter) ranging from 40% to 55%, acid detergent fibre content (w/w dry matter) ranging from 20% to 35%, D₅₀ particle size distribution ranging from 10µm to 300µm, moisture content (w/w) ranging from 2.5% to 12% and fat content (w/w dry matter) ranging from 1% to 6%, by total weight of said fraction.

As another particular preferred embodiment of the invention the sunflower fibre-rich fraction, or composition, has protein content protein content (w/w dry matter) ranging from 20% to 32%, lignin content (w/w dry matter) ranging from 5% to 15%, cellulose content (w/w dry matter) ranging from 25% to 35%, mineral materials content (w/w dry matter) ranging from 4% to 10%, neutral detergent fibre content (w/w dry matter) ranging from 45% to 55%, acid detergent fibre content (w/w dry matter) ranging from 25% to 35%, D₅₀ particle size distribution ranging from 30µm to 70µm, moisture content (w/w) ranging from 2.5% to 12% and fat content (w/w dry matter) ranging from 1% to 6%, by total weight of said fraction.

As a particularly preferred embodiment of the invention, the *Brassica* L. fibre-rich fraction, or composition, has both the cellulose content, the neutral detergent fibre content and the acid detergent fibre content mentioned above.

As another particular preferred embodiment of the invention the *Brassica* L. fibre-rich fraction, or composition, has the cellulose content (w/w dry matter) ranging from 15% to 25%, the neutral detergent fibre content (w/w dry matter) ranging from 40% to 55% and the acid detergent fibre content (w/w dry matter) ranging from 20% to 35%, by total weight of said fraction, preferably the cellulose content (w/w dry matter) ranging from 15% to 25%, the neutral detergent fibre content (w/w dry matter) ranging from 45% to 55% and the acid detergent fibre content (w/w dry matter) ranging from 25% to 35%, by total weight of said fraction.

As another particular preferred embodiment of the invention the *Brassica* L. fibre-rich fraction, or composition, has protein content protein content (w/w dry matter) ranging from 20% to 35%, lignin content (w/w dry matter) ranging from 10% to 20%, cellulose content (w/w dry matter) ranging from 15% to 25%, mineral materials content (w/w dry matter) ranging from 4% to 10%, neutral detergent fibre content (w/w dry matter) ranging from 40% to 55%, acid detergent fibre content (w/w dry matter) ranging from 20% to 35%, D₅₀ particle size distribution ranging from 10µm to 300µm, moisture content (w/w) ranging from 2.5% to 12% and fat content (w/w dry matter) ranging from 1.5% to 6%, by total weight of said fraction.

As another particular preferred embodiment of the invention the *Brassica* L. fibre-rich fraction, or composition, has protein content protein content (w/w dry matter) ranging from 25% to 32%, lignin content (w/w dry matter) ranging from 10% to 20%, cellulose content (w/w dry matter) ranging from 15% to 25%, mineral materials content (w/w dry matter) ranging from 4% to 10%, neutral detergent fibre content (w/w dry matter) ranging from 45% to 55%, acid detergent fibre content (w/w dry matter) ranging from 25% to 35%, D₅₀ particle size distribution ranging from 30µm to 70µm, moisture content (w/w) ranging from 2.5% to 12% and fat content (w/w dry matter) ranging from 1.5% to 6%, by total weight of said fraction.

According to another embodiment of the invention, a composition according to the invention can further be obtained by mixing together protein-rich fractions which are obtained by going through the above described processing steps a) to e), a different number of time. For example, an amount of a protein rich fraction obtained by fractioning the oilseed powder directly obtained from the grinding of the meal only once (one-pass fraction), can be mixed with another amount of a fraction which have already been fractionated twice (two-pass fraction).

### USES

Another object of the invention is the use of any one of the composition and/or fraction above described, or a mixture thereof, as feed or a food or a dietary supplement or additive, for animal and/or human consumption. Another object of the invention is also any foodstuff containing a composition or a fraction above described and its manufacture thereof. In a particular embodiment the animal feed is selected from the group of animal feed chosen in the group consisting of fish, poultry, pork, ruminant (such as cattle, sheep and goat) and rabbit. In another particular embodiment, the protein-rich fraction, as well as any foodstuff/feed containing it is used as, or in, a feed as well as any foodstuff containing them and their manufacture thereof for animals selected from the group consisting of fish, poultry, pork and ruminant. In another particular embodiment, the fibre-rich fraction as well as any foodstuff/feed containing it, is used as, or in, a feed for animal selected from the group consisting of ruminant and rabbit.

Another object of the invention is the use of any one of the composition and/or fraction above described, or a mixture thereof, for the manufacture of a feed or feedstuff containing them, for feeding an animal as described above.

Another object of the invention is a process for manufacturing a feed or feedstuff comprising a step of blending or mixing any one of the composition and/or fraction above described, or a mixture thereof, with an animal feed raw material, such as an oilseeds meal (such as sunflower, *Brassica* L. and canola), soybean meal and grains (such as wheat, barley and maize) or a mixture thereof.

Another object of the invention is the use of any one of the composition and/or fraction above described, or a mixture thereof, as a biofuel or bio material, e.g. building materials. In particular, the use of fractions or compositions which are fibre-rich are considered particularly suitable for this use.

Other features and advantages of the present invention will appear more clearly upon reading the following detailed examples, made with reference to the annexed drawing, and provided as a non-limiting description.

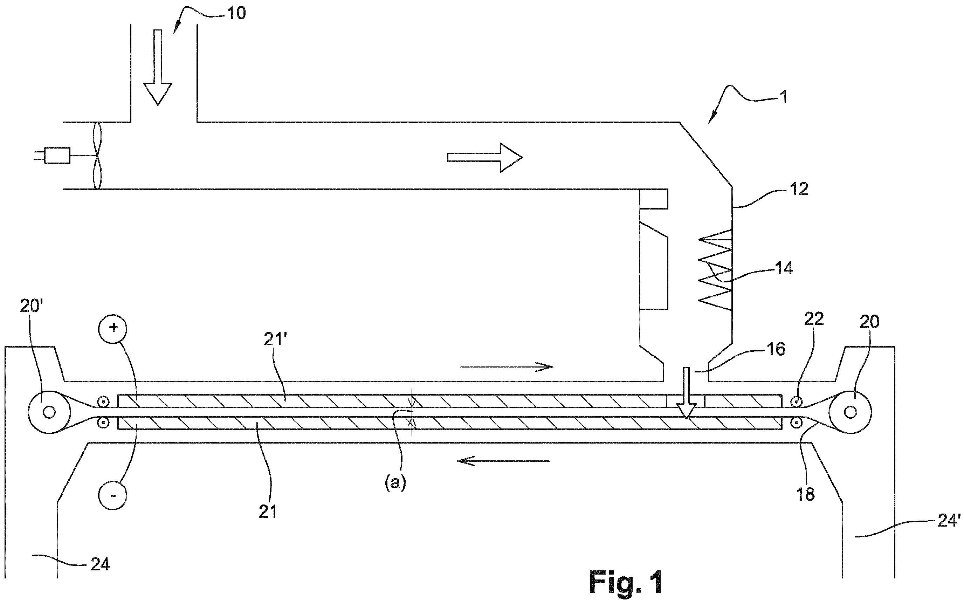

- Figure 1 is a top schematic view of a device for electrostatic separation which can be used in order to obtain a fraction or composition according to the invention;

### Examples

### Example 1 - Sunflower

A protein-rich fraction and a fibre-rich fraction according to an embodiment of the invention are obtained from sunflower meal using the following process:
The sunflower seed meal used in this example is obtained from a defatted oilseed meal produced from dehulled seeds having a protein content of 35.5 % w/w and a moisture content of about 4.6% by total weight of the meal.

The oil content of the meal is low (< 2% w/w) as it is defatted using an organic solvent (i.e. hexane). The amount of protein is measured with the Dumas method calculated as N content x 6.25. The amount of oil is measured with the method CEE 98/64.

The sunflower meal is grinded using a Hosokawa type ZPS grinding machine equipped with a classifier. The grinding parameters are adjusted to obtain the following particle size distribution at ambient temperature (about 17C°):
D₅₀: 30.7 µm, and
D₉₀: 166.0 µm.

Particle size distributions are measured with Malvern equipment by laser diffraction using dry dispersion method (i.e. the particles are dispersed in air).

In order to produce a protein-rich and a protein-low fraction, the grinded sunflower meal is injected in a STET tribo-electrostatic belt separator schematically represented in Figure 1.

The size of the separator device (1) used in the examples is 9.1 meters long, 1.7 meter wide, 3.2 meters high.

The particles are fed to the device (1) via the vertical feeding port (10) shown in figure 1. The sunflower meal powder is injected at the rate of 0.7 to 2.4 metric ton per hour. In the vertical feeder (12), each particle falling within said feeder first follows a random trajectory and hits the irregular walls (14) of the feeder (10) as well as the other particles thus gaining electro-static charges. Reaching the exit port (16) at the bottom of the vertical feeder (12), the particles are fed within the space defined by the loop created by the moving belt (18).

The conveyor belt (18) is driven by two driving wheels (20 and 20') powered by synchronised engines and which are positioned at each end of the belt (18) and driving the belt (18) at a predetermined speed. The flexible belt (18) is wrapped around and rotates about the driving wheels (20 & 20') to form a loop and is performing a continual revolutionary movement (a circular loop) around said two driving wheels (20 and 20'). The conveyor belt (18) is thus defining an internal space extending horizontally for about 7 to 9 meters in length. Two horizontal flat electrodes (21) and (21') of opposite charges are positioned respectively above and below the belt portions, creating a magnetic field in the space between the two belt portions. The electrodes both extend horizontally for a substantial portion of the distance defined by the belt's length. The gap between both electrodes is about 1.20 cm. Four smaller (non-driving) wheels (22) are spaced from the driving wheels (20) and (20') to guide the upper portion of the belt (18) beneath one electrode and the lower portion of the belt (18) above the other electrode. The potential difference applied is 6kV.

Thus, the internal space created by the rotating pathway of the belt (18) has a narrow width (a) (less than 1.20 cm between the upper and lower belt portion as above mentioned). The belt (18) is moving at a high speed of about 20m/s. The particles fed by the vertical feeder (12) to the electrode's gap are attracted by one of the electrode (20 & 20') and repulsed by the other as well as conveyed by the belt (18).

The tribo-charged particles are attracted depending upon their specific charges by one of the electrodes (21) and (21') and repulsed by the other. Particles of the same charges are attracted by one same electrode and carried along one of the belt (18) upper or lower portion up to one of the belt's end. Particles of opposite charges are attracted by the other electrode and carried along the opposite belt portion and are carried away to the other extremity of the belt. The belt surface is specifically corrugated or profiled in order to improve particles separation and clean the electrodes surfaces. More particularly the corrugations are specifically oriented in order to improve particle separation.

In the example presented the top electrode is charged positively. The upper portion of the belt loop, the one close to the positive electrode is going in one direction, the lower portion of the belt loop, the one close to the bottom negative electrode, is going to the opposite direction. Hence, negatively charged particles, rich in bran or fibres, are collected at one end of the loop belt, while positively charged particles, rich in proteins, are collected at the other end of the loop belt in collecting containers which are fluid communication with both the extremities of the belt (18).

The table below shows the characteristics of the sunflower seed meal (or feed material) and the 2 fractions (high and low protein) after a first pass.

**TABLE I**

| Type | Feed | First Pass High protein | First Pass Low protein |
|---|---|---|---|
| Particles distribution (D₅₀) (microns) | 30 | 30 | 50 |
| Humidity (%) | 4.6 | 4.3 | 4.3 |
| Protein content (% raw matter) | 37.3 | 45.2 | 27.4 |
| Fat / Lipid (% raw matter) | 1.7 | 1.6 | 1.7 |
| Cellulose (% raw matter) | 20.6 | 13.5 | 29.9 |
| Mineral Materials (% raw matter) | / | 7.2 | 5.8 |
| Neutral Detergent Fiber (% raw matter) | / | 32.21 | 55.6 |
| Acid Detergent Fiber (% raw matter) | / | 15.08 | 31.8 |
| Acid Detergent Lignin (% raw matter) | / | 4.12 | 10.8 |
| Average protein increase 1^{st} pass (%) | n/a | 21% | n/a |
| Average product yield 1^{st} pass (%) | n/a | 49.5% | 50.5% |

The humidity, or moisture content, is measured by gravimetry (loss of weight) after the sample being dried for 4 hours at 103°C (standard NF ISO 6496 (Oct- 2011). The protein content is assessed according to the Dumas method by measuring the nitrogen content of a charred sample (standard NF EN ISO 16634 (2008). The fat lipid content is measured by extraction using light petroleum (standard CEE98/64 (1998)). The cellulose content is assessed according to the Wendee method using gravimetric measurements before and after the sample is treated with various acids and alkaline materials (standard NF V03-040 (1993)). The amount of minerals is assessed using gravimetric measurements before and after a sample is mineralised at 550°C according to the standard NF V18-101 (1977). Fibers and lignin contents are measured by using various detergents either neutral or acidic using standard methods (Standard NF V18-122 (2013)).

In order to increase further the protein content and reduce the proportion of cellulose or lignin (or ADL) of the fraction high in proteins the resulting first pass high protein fraction was fed to the tribo-separating apparatus a second time to carry out a second fractionation.

The resulting composition (second pass high protein fraction), which is also part of the invention is shown in the following Table II.

**TABLE II**

| **Analysis** | **Result** | **Unit** |
|---|---|---|
| Solubility MAS KOH | 73 | G/L |
| MOISTURE-Dessic 4h/103°C NF ISO 6496 (10/2011) | 6.70 | % |
| PROTEIN CONTENT NF EN ISO 16634 (2008) | 48.9 | % |
| FAT CEE98/64 (light petroleum) 1998 | 1.8 | % |
| CELLULOSE-Wendee Gravimetric NF V 03-040 | 5.1 | % |
| MINERALS at 550°C NF v 18-101 1977 | 7.6 | % |
| STARCH regulation CEE 152/2009 (Ewers specific rotation) 2009 | 4.4 | % |
| TOTAL SUGARS LuffSchoorl R. CEE 152/2009 (ethanol) | 8.4 | % |
| NEUTRALDETERGENT FIBRE - Acid hydrolysis NF V 18-122 (2013) | 18.7 | % |
| ACID DETERGENT FIBRE -Acid Hydrolysis NF V 18-122 (2013) | 10.8 | % |
| LIGNIN (ACID DETERGENT LIGNIN [ADL]) - Meth. Acid hydrolysis NF V18-122 (2013) | 2.3 | % |
| PHOSPHORE - ICP microwave NF EN ISO 15621 (2012) | 1.500 | % |
| CALCIUM - ICP microwave NF EN ISO 15621 (2012) | 0.42 | % |
| POTASSIUM - ICP microwave NF EN ISO 15621 (2012) | 1.49 | % |
| SODIUM - ICP microwave NF EN ISO 15621 (2012) | 0.00 | % |
| TOTAL LYSINE - HPLC - NF EN ISO 13903 (2005) - react ninhydrin/ detect. 570nm. | 1.61 | % |
| METHIONINE - Method XP V 18-113 NF EN ISO 13903 (2005) | 0.86 | % |
| ARGININ HPLC - NF EN ISO 13903 (2005) | 3.93 | % |
| TOTAL THREONIN - NF EN ISO 13903 (2005) | 1.85 | % |
| LEUCINE HPLC - NF EN ISO 13903 (2005) | 3.08 | % |
| ISOLEUCIN HPLC - NF EN ISO 13903 (2005) | 2.00 | % |
| VALIN HPLC - NF EN ISO 13903 (2005) | 2.29 | % |
| PHENYLALAMIN HPLC - NF EN ISO 13903 (2005) | 2.19 | % |
| TYROSIN HPLC - NF EN ISO 13903 (2005) | 0,00 | % |
| GLUTAMIC ACID HPLC - NF EN ISO 13903 (2005) | 9.37 | % |
| SERINE HPLC - NF EN ISO 13903 (2005) | 2.13 | % |
| HISTIDINE HPLC - NF EN ISO 13903 (2005) | 1,24 | % |
| ALANINE HPLC - NF EN ISO 13903 (2005) | 2,09 | % |
| ASPARTIC ACID HPLC - NF EN ISO 13903 (2005) | 4,54 | % |
| GLYCIN HPLC - NF EN ISO 13903 (2005) | 3 | % |
| PROLINE HPLC - NF EN ISO 13903 (2005) | 2 | % |
| GLUCOSINOLATES- dil. methanol - Internal Enzymatic method ISO 9167 - HPLC (2013) | 0,00 | Mic Mol/g |
| C12.0 CHROMATOGRAPHY NF EN ISO 5508/5509 (2011) | <0,100 pct | % |
| C14.0 CHROMATOGRAPHY - NF EN ISO 5508/5509 (2011) | <0,100 pct | % |
| C14.1 - CHROMATOGRAPHY NF EN ISO 5508/5509 (2011) | <0,100 pct | % |
| C15.0 - CHROMATOGRAPHY NF EN ISO 5508/5509 (2011) | <0,100 pct | % |
| C16.0 - CHROMATOGRAPHY NF EN ISO 5508/5509 (2011) | <0,100 pct | % |
| C16.1 - CHROMATOGRAPHY NF EN ISO 5508/5509 (2011) | <0,100 pct | % |
| C17.0 - CHROMATOGRAPHY NF EN ISO 5508/5509 (2011) | <0,100 pct | % |
| C17.1 - CHROMATOGRAPHY NF EN ISO 5508/5509 (2011) | <0,100 pct | % |
| C18.0 - CHROMATOGRAPHY NF EN ISO 5508/5509 (2011) | 3,4 | % |
| C18.1 - CHROMATOGRAPHY NF EN ISO 5508/5509 (2011) | 29,400 | % |
| C18.2 -CHROMATOGRAPHY NF EN ISO 5508/5509 (2011) | 59,500 | % |
| C18.3 - ALA CHROMATOGRAPHY NF EN ISO 5508/5509 (2011) | <0,100 | % |
| C20.0 - CHROMATOGRAPHY NF EN ISO 5508/5509 (2011) | <0,100 pct | % |
| C20.1 - CHROMATOGRAPHY NF EN ISO 5508/5509 (2011) | <0,100 pct | % |
| C20.2 - CHROMATOGRAPHY (Omega 6) NF EN ISO 5508/5509 (2011) | <0,100 pct | % |
| C20.4 - CHROMATOGRAPHY (Omega 6 ARA) NF EN ISO 5508/5509 (2011) | <0,100 pct | % |
| C20.5 - CHROMATOGRAPHY (Omega 3 EPA) NF EN ISO 5508/5509 (2011) | <0,1 | % |
| C22.0 - CHROMATOGRAPHY NF EN ISO 5508/5509 (2011) | <0,100 pct | % |
| C22.1 - CHROMATOGRAPHY NF EN ISO 5508/5509 (2011) | <0,100 pct | % |
| C22.4 - CHROMATOGRAPHY (Omega 6) NF EN ISO 5508/5509 (2011) | <0,100 pct | % |
| C22.5 - CHROMATOGRAPHY (Omega 3 DPA) NF EN ISO 5508/5509 (2011) | <0,100 pct | % |
| C22.6- DHA CHROMATOGRAPHY (Omega 3 DHA) NF EN ISO 5508/5509 (2011) | <0,1 | % |
| C24.0 - CHROMATOGRAPHY NF EN ISO 5508/5509 (2011) | <0,100 pct | % |
| ANTITRYPSIC FACTORS -XP V 18-202 AOCS Ba 12.75 (conformance) - 1991 - | 1650,00 | TIU/G |
| % fatty Acids relative to C15:1 | <0,100 pct | % |
| C10:0 - Capric acid | <0.100 pct | % |
| C20.3 (n-3c) - Ac. Eicosatrinenoic Compliance : YES | <0.100 pct | % |
| Pepsin Digestion - 24h - Directive CEE 72/199 (1972) | 94.20 | % |
| MAS KOH | 35.900 | % |
| | | |
| ERUCIC ACID | <0.100 pct | % |

"Solubility in KOH" measures the ratio of mass soluble protein in an aqueous solution of KOH of 0.035N in respect of the total mass of protein (e.g. Bipea FRANCE).

%: % weight by total weight of the mix.

The amounts of fatty acids is obtained (standard NF EN ISO 5508/5509 (2011)) by hexane extraction (at room T°), dissolution in iso-octane and transesterification of the sample using KOH. Neutralisation using sodium bisulphate is carried to prevent saponification. Esters are detected using GC/FID. Antitrypsic factors are measured by dosing the inhibition of added trypsin, using BAPA at 410 nm.

### Example 2 - Canola

A protein-rich fraction and a fibre-rich fraction according to an embodiment of the invention are obtained from a rapeseed using the same method as described above.

The canola/rapeseed meal used in this example is obtained from a defatted oilseed meal from *Brassica napus* var. *napus* seed. The meal is produced from hulled seed having a protein content of 35.5 % w/w and a moisture content of about 4.6% w/w.

The oil/fat content of the meal is low (< 2% w/w) as it is defatted using an organic solvent (i.e. hexane). The amount of protein is measured with the Dumas method calculated as N content x 6.25. The amount of oil is measured with the method CEE 98/64.

The meal is grinded using a Hosokawa type ZPS grinding machine equipped with a classifier. The grinding parameters are adjusted to obtain the following particle size distribution at ambient temperature (about 17C°):
D₅₀: 24.6 µm
D₉₀: 88.8 µm.

The table below shows the characteristics of the feed material and the 2 fractions (high and low protein) after a first pass.

**TABLE III**

| Type | Feed | First Pass High protein | First Pass Low protein |
|---|---|---|---|
| Particle distribution (D₅₀) (microns) | 30 | | |
| Humidity (%) | 4.6 | 3.9 | 4.5 |
| Protein content (% raw matter) | 33.6 | 40.7 | 30 |
| Fat / Lipid (% raw matter) | n.d. | 2.2 | 2.1 |
| Cellulose (% raw matter) | 15.6 | 10.1 | 19.1 |
| Mineral Materials (% raw matter) | n.d. | 7.1 | 6.8 |
| Neutral Detergent Fiber (% raw matter) | n.d. | 33.2 | 48.8 |
| Acid Detergent Fiber (% raw matter) | n.d. | 15.4 | 30.0 |
| Acid Detergent Lignin (% raw matter) | n.d. | 3.6 | 13.2 |
| Average protein increase 1^{st} pass (%) | n/a | 21 | n/a |
| Average product yield 1^{st} pass (%) | n/a | 34.4 | 65.6 |

In order to demonstrate the reproducibility of the method, another canola/rapeseed meal sample was submitted to the triboseparation process and the detailed analysis of the content of high-protein first pass is shown below in Table IV.

**TABLE IV**

| **Analysis** | **Result** | **Unit** |
|---|---|---|
| Solubility MAS KOH | 54 | G/L |
| MOISTURE-Dessic 4h/103°C NF ISO 6496 (10/2011) | 5.20 | % |
| PROTEIN CONTENT NF EN ISO 16634 (2008) | 40.5 | % |
| FAT CEE98/64 (light petroleum) 1998 | 3.6 | % |
| CELLULOSE-Wendee Gravimetric NF V 03-040 | 7.2 | % |
| MINERALS at 550°C NF v 18-101 1977 | 7.2 | % |
| STARCH regulation CEE 152/2009 (Ewers specific rotation) 2009 | 6.2 | % |
| TOTAL SUGARS LuffSchoorl R. CEE 152/2009 (ethanol) | 10.7 | % |
| NEUTRALDETERGENT FIBRE - Acid hydrolysis NF V 18-122 (2013) | 19.3 | % |
| ACID DETERGENT FIBRE - Acid Hydrolysis NF V 18-122 (2013) | 10.7 | % |
| | | |
| LIGNIN (ACID DETERGENT LIGNIN [ADL]) - Meth. Acid hydrolysis NF V18-122 (2013) | 2.0 | % |
| PHOSPHORE - ICP microwave NF EN ISO 15621 (2012) | 1.430 | % |
| CALCIUM - ICP microwave NF EN ISO 15621 (2012) | 0.58 | % |
| POTASSIUM - ICP microwave NF EN ISO 15621 (2012) | 1.22 | % |
| SODIUM - ICP microwave NF EN ISO 15621 (2012) | 0.00 | % |
| TOTAL LYSINE - HPLC - NF EN ISO 13903 (2005) -react ninhydrin/ detect. 570nm. | 2.15 | % |
| METHIONINE - Method XP V 18-113 NF EN ISO 13903 (2005) | 0.81 | % |
| ARGININ HPLC - NF EN ISO 13903 (2005) | 2.45 | % |
| TOTAL THREONIN - NF EN ISO 13903 (2005) | 1.87 | % |
| LEUCINE HPLC - NF EN ISO 13903 (2005) | 2.95 | % |
| ISOLEUCIN HPLC - NF EN ISO 13903 (2005) | 1.66 | % |
| VALIN HPLC - NF EN ISO 13903 (2005) | 2.05 | % |
| PHENYLALAMIN HPLC - NF EN ISO 13903 (2005) | 1.66 | % |
| TYROSIN HPLC - NF EN ISO 13903 (2005) | 0,00 | % |
| GLUTAMIC ACID HPLC - NF EN ISO 13903 (2005) | 6.89 | % |
| SERINE HPLC - NF EN ISO 13903 (2005) | 1.83 | % |
| HISTIDINE HPLC - NF EN ISO 13903 (2005) | 1.16 | % |
| ALANINE HPLC - NF EN ISO 13903 (2005) | 1.89 | % |
| ASPARTIC ACID HPLC - NF EN ISO 13903 (2005) | 3.18 | % |
| GLYCIN HPLC - NF EN ISO 13903 (2005) | 2 | % |
| PROLINE HPLC - NF EN ISO 13903 (2005) | 3 | % |
| GLUCOSINOLATES- dil. methanol - Internal Enzymatic method ISO 9167 - HPLC (2013) | 7.60 | Mic Mol/g |
| C12.0 CHROMATOGRAPHY NF EN ISO 5508/5509 (2011) | <0,100 pct | % |
| C14.0 CHROMATOGRAPHY - NF EN ISO 5508/5509 (2011) | <0,100 pct | % |
| C14.1 - CHROMATOGRAPHY NF EN ISO 5508/5509 (2011) | <0,100 pct | % |
| C15.0 - CHROMATOGRAPHY NF EN ISO 5508/5509 (2011) | <0,100 pct | % |
| C16.0 - CHROMATOGRAPHY NF EN ISO 5508/5509 (2011) | 6.800 | % |
| C16.1 - CHROMATOGRAPHY NF EN ISO 5508/5509 (2011) | 1.7 | % |
| C17.0 - CHROMATOGRAPHY NF EN ISO 5508/5509 (2011) | <0,100 pct | % |
| C17.1 - CHROMATOGRAPHY NF EN ISO 5508/5509 (2011) | <0,100 pct | % |
| C18.0 - CHROMATOGRAPHY NF EN ISO 5508/5509 (2011) | 1.5 | % |
| C18.1 - CHROMATOGRAPHY NF EN ISO 5508/5509 (2011) | 56.300 | % |
| C18.2 -CHROMATOGRAPHY NF EN ISO 5508/5509 (2011) | 25.400 | % |
| C18.3 - ALA CHROMATOGRAPHY NF EN ISO 5508/5509 (2011) | 6.500 | % |
| C20.0 - CHROMATOGRAPHY NF EN ISO 5508/5509 (2011) | 0.9 | % |
| C20.1 - CHROMATOGRAPHY NF EN ISO 5508/5509 (2011) | 0.9 | % |
| C20.2 - CHROMATOGRAPHY (Omega 6) NF EN ISO 5508/5509 (2011) | <0,100 pct | % |
| C20.4 - CHROMATOGRAPHY (Omega 6 ARA) NF EN ISO 5508/5509 (2011) | <0,100 pct | % |
| C20.5 - CHROMATOGRAPHY (Omega 3 EPA) NF EN ISO 5508/5509 (2011) | <0,1 | % |
| C22.0 - CHROMATOGRAPHY NF EN ISO 5508/5509 (2011) | <0,100 pct | % |
| C22.1 - CHROMATOGRAPHY NF EN ISO 5508/5509 (2011) | <0,100 pct | % |
| C22.4 - CHROMATOGRAPHY (Omega 6) NF EN ISO 5508/5509 (2011) | <0,100 pct | % |
| C22.5 - CHROMATOGRAPHY (Omega 3 DPA) NF EN ISO 5508/5509 (2011) | <0,100 pct | % |
| C22.6- DHA CHROMATOGRAPHY (Omega 3 DHA) NF EN ISO 5508/5509 (2011) | <0,1 | % |
| C24.0 - CHROMATOGRAPHY NF EN ISO 5508/5509 (2011) | <0,100 pct | % |
| ANTITRYPSIC FACTORS -XP V 18-202 AOCS Ba 12.75 (conformance) - 1991 - | 713,00 | TIU/G |
| | | |
| % fatty Acids relative to C15:1 | <0,100 pct | % |
| C10:0 - Capric acid | <0.100 pct | % |
| C20.3 (n-3c) - Ac. Eicosatrinenoic Compliance : YES | <0.100 pct | % |
| Pepsin Digestion - 24h - Directive CEE 72/199 (1972) | 91.20 | % |
| MAS KOH | 22000 | % |
| | | |
| ERUCIC ACID | <0.100 pct | % |

Data from table III and IV were obtained according to the same methods than the ones described previously in reference with Tables I and II.

## Claims

1. A protein-rich fraction from an oilseed meal which is obtainable by a process of electrostatic separation, said process comprising the following steps:
a) providing a grinded particles powder of an oilseed meal, said oilseed meal having a D₅₀ ranging from 10 µm to 400 µm and a moisture content ranging from 2% to 15% in weight by total weight of said powder, to a device for electrostatic separation, said device (1) comprising:
- a feed port (12),
- two parallel, spaced electrodes, (21 & 21') each positioned horizontally facing one another, one of said electrode (21) being a top electrode and the other being a bottom electrode (21'), and an electrode gap being defined as the space between said two electrodes (21 & 21'),
- a belt **(18)** traveling in a generally horizontal direction, said belt being positioned, at least partially, within said gap between said spaced electrodes (21 & 21'), said belt (18) forming a continuous longitudinal loop having two extremities, and having two opposite traveling belt portions which are moving in opposite directions and are configured for transporting particles of said powder to an extremity of said belt (18),
- a first collecting container in fluid communication with one of the extremity of said belt (18) to collect the particles dropping from said belt at that one extremity;
b) applying an electrical field between said electrodes by applying to said electrode a difference of potential of 2 to 8 kV,
c) driving said belt at a speed of 15 to 25 m/s;
d) feeding said grinded particle powder to said belt via said feed port within said continuous longitudinal loop; and
e) recovering said protein fraction from said first collecting container;
wherein said oilseed meal is a sunflower seed meal or *Brassica* L. seed meal.

2. The protein-rich fraction of Claim 1, wherein steps a) to e) are carried out on a protein fraction recovered from step e) at least once.

3. The protein-rich fraction of Claim 1 or 2, wherein said top electrode has a positive polarity and said bottom electrode has a negative polarity.

4. The protein-rich fraction of anyone of Claims 1 to 3, wherein said feed port is positioned close to the extremity of the belt opposite to said first collecting container.

5. The protein-rich fraction of anyone of Claims 1 to 4, wherein said fraction has a moisture content which ranges from 3 to 5%, in weight, preferably 4%, in respect of the total weight of said fraction.

6. The protein-rich fraction of anyone of Claims 1 to 5, wherein said electrode gap is ranging from 1.1 to 1.3 cm, preferably said electrode gap is about 1.20 cm.

7. The protein fraction of anyone of Claims 1 to 6, wherein said difference of potential is about 6kV.

8. The protein fraction of anyone of Claims 1 to 7, wherein said speed of the belt is about 20 m/s.

9. The protein fraction of anyone of Claims 1 to 8, wherein said grinded particles have a D₅₀ being less than, or equal to, 50µm, preferably less than, or equal to, 25µm.

10. A dry sunflower protein-rich composition, said composition comprising a dry matter content of sunflower proteins ranging from 44 to 60, in weight %, and a dry matter content of Acid Detergent Lignin ranging from 2 to 5 in weight % in respect of the total weight of dry matter of said composition.

11. A dry *Brassica* L. protein-rich composition, said composition comprising a dry matter content of *Brassica* L. proteins ranging from 40 to 50, in weight %, and a content of Acid Detergent Lignin ranging from 1.5 to 4 in weight % in respect of the total weight of dry matter of said composition.

12. A dry *Brassica* L. protein-rich composition of claim 11, wherein the *Brassica* L. is *Brassica napus* var *napus.*
